# EUROPEAN PATENT SPECIFICATION

(11) **EP 4 564 645 B1**
(45) Date of publication and mention of the grant of the patent: **13.05.2026**
(21) Application number: 24197557.2
(22) Date of filing: 30.08.2024
(51) Int. Cl.: H02J 7/00

(54) **BATTERY MANAGEMENT APPARATUS AND METHOD**
BATTERIEVERWALTUNGSVORRICHTUNG UND -VERFAHREN
APPAREIL ET PROCÉDÉ DE GESTION DE BATTERIE

(30) Priority: 01.12.2023 KR 20230172416
(43) Date of publication of application: 04.06.2025
(73) Proprietor: SAMSUNG SDI CO., LTD., Giheung-gu Yongin-si, Gyeonggi-do 17084 (KR)
(72) Inventor: KIM, Hwa Su, Suwon-si, Gyeonggi-do 16678 (KR)
(74) Representative: Gulde & Partner

(56) References cited:
- EP-A1- 3 340 424
- US-A1- 2021 273 270
- US-B2- 10 608 443

## Description

### BACKGROUND

### 1. Field

Aspects of embodiments of the present disclosure relate to a battery management apparatus and method capable of preventing unbalanced charging between battery cells.

### 2. Description of the Related Art

In general, a lifetime of a battery pack (or a cell to pack (CTP)) or battery module composed of one or more battery cells is determined by a weak battery cell (or a worst cell) with a reduced lifetime due to fastest degradation among the battery cells included in the battery module (or the battery pack).

For example, as a battery is used, a deviation occurs between the battery cells, and the deviation accelerates the degradation of a specific cell (weak battery cell), resulting in ultimately shortening the lifetime of the battery module (or the battery pack) due to this battery cell (i.e., the weak battery cell) (even when the remaining batter cells are still in a sufficiently usable state).

Therefore, in order to extend the lifetime of the battery module (or the battery pack) composed of the plurality of battery cells, there is a need for a technology of preventing unbalanced charging between the battery cells.

In addition, as a capacity of the battery cell increases, the unbalanced charging between sections (or areas) occurs even in a single battery cell, and thus there is a need for a technology for preventing unbalanced charging between sections of battery cells.

US2021/273270A1 describes a battery system including a battery module that includes a plurality of cells. A management unit manages charging-discharging of the battery module and a temperature sensor inside the battery module. The management unit estimates a maximum temperature of an inside of a cell in the battery module based on a measured temperature in the battery module, and controls, during charging-discharging of the battery module, a charging-discharging current of the battery module and/or cooling of the battery module in such a way that the estimated maximum temperature does not exceed an upper limit temperature.

### SUMMARY

The present invention is directed to providing a battery management apparatus and method capable of preventing unbalanced charging between battery cells in a battery module (or a battery pack) composed of a plurality of battery cells.

In addition, the present invention is directed to providing a battery management apparatus and method capable of preventing unbalanced charging between sections in a single battery cell.

According to an aspect of the present invention, there is provided a battery management apparatus including a temperature sensor configured to measure a temperature for each section of each battery cell included in a battery module, a heat management module configured to control a temperature of the battery cell or the temperature for each section of each battery cell, and a processor, wherein the processor is configured to: calculate a maximum average slope value (gCell1 to gCellN) for each battery cell which is a maximum value among a plurality of average temperature slopes for respective sections of each battery cell, wherein the maximum average slope value corresponds to a maximum value among a plurality of average temperature deviations with nearby sections for respective sections of each battery cell, and perform temperature control or charging current control in a specific manner on a weak battery cell based on the maximum average slope values (gCell1 to gCellN) of a plurality of battery cells.

When a maximum value (max(gCell1~gCellN)) among the maximum average slope values (gCell1 to gCellN) of a plurality of battery cells is greater than a specified threshold lower limit temperature value (Threshold_low), the processor may perform the temperature control or the charging current control on the weak battery cell corresponding to a battery cell of which the maximum value among the plurality of average temperature deviations with nearby sections for respective sections is the greatest.

When performing the charging current control in a specified manner, the processor may perform current reduction control using a difference value between the maximum value (max(gCell1~gCellN)) and a specified threshold upper limit temperature value (Threshold_high).

When performing the current reduction control, the processor may stop charging with not performing current reduction control any more when a value obtained by subtracting the maximum value (max(gCell1~gCellN)) from the threshold upper limit temperature value (Threshold_high) is 1 and thus a weight value (Weighted_factor) is 0.

The weight value (Weighted_factor) may correspond to a value (i.e., Logₓ(Threshold_high-the maximum slope average value)) obtained by subtracting the maximum value (max(gCell1~gCellN)) from the specified threshold upper limit temperature value (Threshold_high) and taking a log for a resultant value.

When performing the current reduction control, the processor may not immediately control a charging current to increase by only changing the weight to decrease in a range of the specified threshold upper limit temperature (Threshold_high) and the specified threshold lower limit temperature (Threshold_low) even when the temperature of the battery cell is reduced by the reduction of the charging current.

When performing the current reduction control, the processor may finish the stop of the charging and re-performs charging with an original maximum current by increasing the charging current when the weight value (Weighted_factor) is reset to 1 as the maximum value (max(gCell1~gCellN)) is smaller than the specified threshold lower limit temperature (Threshold_low).

When performing the current reduction control, the processor may perform charging while continuously maintaining an already reduced current rather than stopping the charging when a value obtained by subtracting the maximum value (max(gCell1~gCellN)) from the threshold upper limit temperature value (Threshold_high) is not 1 and thus the weight value is not 0.

When the maximum value (max(gCell1~gCellN)) is smaller than the threshold lower limit temperature (Threshold_low) and the weight value (Weighted_factor) is reset to 1 as the processor performs charging while continuously maintaining the reduced current, the processor may continuously perform the charging with an original maximum current by increasing the reduced charging current.

According to another aspect of the present invention, there is provided a battery management method including, calculating, by a processor, with respect to a plurality of battery cells included in a battery module, a maximum average slope value (gCell1 to gCellN) for each battery cell which is a maximum value among a plurality of average temperature slopes for respective sections of each battery cell, wherein the maximum average slope value corresponds to a maximum value among a plurality of average temperature deviations with nearby sections for respective sections of each battery cell, and performing, by the processor, temperature control or charging current control in a specific manner on a weak battery cell based on the maximum average slope values (gCell1 to gCellN) of a plurality of battery cells.

The method may further include calculating, by the processor, a maximum value (max(gCell1~gCellN)) among the maximum average slope values (gCell1 to gCellN) of a plurality of battery cells, wherein, when the maximum value (max(gCell1~gCellN)) of the plurality of battery cells is greater than a specified threshold lower limit temperature value (Threshold_low), the processor may perform the temperature control or the charging current control on the weak battery cell corresponding to a battery cell of which the maximum value among the plurality of average temperature deviations with nearby sections for respective sections is the greatest.

In the performing of the charging current control in the specified manner, the processor may perform current reduction control using a difference value between the maximum value (max(gCell1~gCellN)) and a specified threshold upper limit temperature value (Threshold_high).

When performing the current reduction control, the processor may stop charging with not performing the current reduction control any more when a value obtained by subtracting the maximum value (max(gCell1~gCellN)) from the threshold upper limit temperature value (Threshold_high) is 1 and thus a weight value (Weighted_factor) is 0.

The weight value (Weighted_factor) may correspond to a value (i.e., Logₓ(Threshold_high-the maximum slope average value)) obtained by subtracting the maximum value (max(gCell1~gCellN)) from the specified threshold upper limit temperature value (Threshold_high) and taking a log for a resultant value.

When performing the current reduction control, the processor may not immediately control a charging current to increase by only changing the weight to decrease in the range of the specified threshold upper limit temperature (Threshold_high) and the specified threshold lower limit temperature (Threshold_low) even when the temperature of the battery cell is reduced by reduction of the charging current.

When performing the current reduction control, the processor may finish the stop of the charging and re-performs charging with an original maximum current by increasing the charging current when the weight value (Weighted_factor) is reset to 1 as the maximum value (max(gCell1~gCellN)) is smaller than the specified threshold lower limit temperature (Threshold_low).

When performing the current reduction control, the processor may perform charging while continuously maintaining an already reduced current rather than stopping charging when a value obtained by subtracting the maximum value (max(gCell1~gCellN)) from the threshold upper limit temperature value (Threshold_high) is not 1 and thus the weight value is not 0.

When the maximum value (max(gCell1~gCellN)) is smaller than the threshold lower limit temperature (Threshold_low) and the weight value (Weighted_factor) is reset to 1 as the processor performs the charging while continuously maintaining the reduced current, the processor may continuously perform the charging with an original maximum current by increasing the reduced charging current.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a schematic diagram illustrating a configuration of a battery management apparatus according to one embodiment of the present invention.
FIG. 2 is a flowchart for describing a battery management method according to one embodiment of the present invention.
FIG. 3 is an exemplary view illustrating positions at which a temperature sensor and a heat management module in FIG. 1 are disposed.
FIGS. 4A and 4B are exemplary views for describing a method of determining a weak battery cell and performing current control in FIG. 2.
FIG. 5 is an exemplary view for describing a method of determining a weak battery cell and performing temperature control in FIG. 2.
FIG. 6 is an exemplary view for describing start points of a temperature detecting operation and a temperature control operation to be performed on a battery cell in FIG. 1.
FIG. 7 is a flowchart for describing a method of performing charging current control according to a first embodiment of the present invention.
FIGS. 8A and 8B are tables for exemplarily describing the method of performing charging current control according to a maximum inter-cell deviation in FIG. 7.
FIGS. 9A to 9E are exemplary views for describing a method of calculating slope values with respect to surrounding temperatures for each section of the battery cell in order to perform charging current control in a method according to a second embodiment of the present invention.
FIGS. 10A to 10C are exemplary views for describing a method of calculating average values of slopes with respect to surrounding temperatures for each section of the battery cell in FIGS. 9A to 9E.
FIG. 11 is a flowchart for describing a method of performing the charging current control according to the second embodiment of the present invention.
FIGS. 12A to 12K are exemplary views for describing a method of calculating average values of maximum slopes for each battery cell using the average values of the slopes for each section of each battery cell among a plurality of battery cells configured in a battery module in FIGS. 10A to 10C.
FIGS. 13A and 13B are tables for exemplarily describing the charging current control method according to a maximum inter-cell deviation in FIG. 11.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

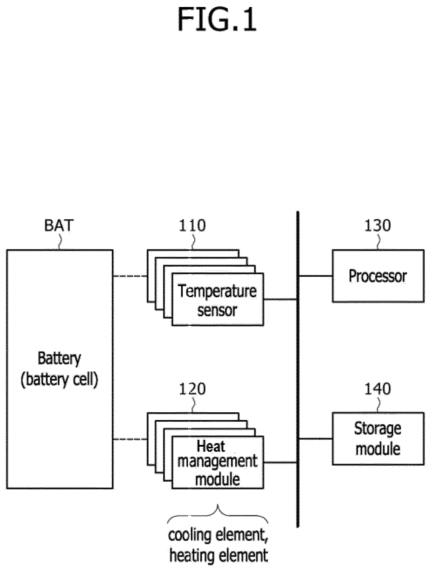

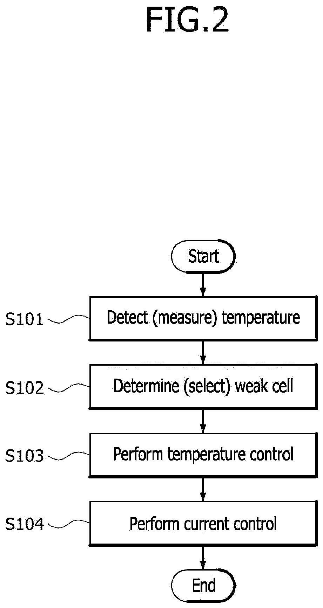

FIG. 1 is a schematic diagram illustrating a configuration of a battery management apparatus according to one or more embodiments of the present disclosure, and FIG. 2 is a flowchart for describing a battery management method according to one one or more embodiments of the present disclosure.

As illustrated in FIG. 1, a battery management apparatus according to one or more embodiments includes a temperature sensor 110, a heat or thermal management module 120, a processor 130, and a storage module 140.

The temperature sensor 110 may measure (detects) a temperature for each section of a battery cell.

Here, a battery BAT includes a battery pack (or a cell to pack (CTP)) and a battery module, which may include of one battery cell or a plurality of battery cells.

The temperature sensor 110 may include a plurality of temperature sensors to measure the temperature for each section of the battery cell.

The heat management module 120 may increase or decrease the temperature for each section of each battery cell.

In one or more embodiments, the heat management module 120 may include a cooling device (i.e., a device for decreasing a temperature of a battery) and a heating device (i.e., a device for increasing the temperature of the battery). For example, the heat management module 120 may increase or decrease the temperature for each section of each battery cell using, for example, a thermoelectric device (or a water block).

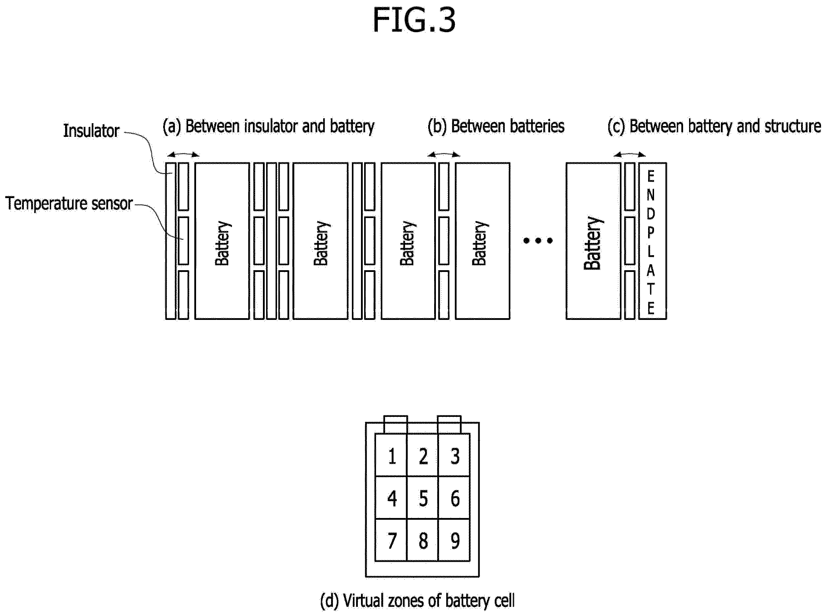

FIG. 3 is an exemplary view illustrating positions at which a temperature sensor and a heat management module in FIG. 1 may be disposed, in which FIGS. 3A to 3C are exemplary views illustrating a side cross-section of the battery module, and FIG. 3D is an exemplary view illustrating a front surface (or a front surface) of the battery cell BAT according to one or more embodiments of the present disclosure.

Referring to FIG. 3, the temperature sensor 110 may be disposed between an insulator and the battery (see FIG. 3A), between the battery and another battery (see FIG. 3B), and between the battery and a structure (e.g., EndPlate) (see FIG. 3C), the battery cell BAT may be virtually divided into a plurality of sections or areas (see FIG. 3D), and the temperature sensor 110 may be disposed in each section of the battery cell.

In this case, the heat management module 120 may be installed in each section of the battery cell.

In one or more embodiments, the heat management module 120 may cool or heat the battery cell for each section of the battery cell through an endothermic/exothermic reaction using the thermoelectric device (or the water block).

In this case, the heat management module 120 and the temperature sensor 110 may be disposed at positions which do not overlap each other to prevent the occurrence of errors during temperature detection (measurement).

The processor 130 may interwork and manage the temperature sensor 110 and the heat management module 120 according to a specified algorithm.

The processor 130 may determine (select) a weak battery cell (or a worst battery cell) with a reduced lifetime due to fastest degradation among the plurality of battery cells based on the temperature for each section of the battery cell detected (measured) through the temperature sensor 110.

If the weak battery cell (or a weak section) is determined (selected), the processor 130 may perform at least one of temperature control (e.g., cooling control or heating control) and current control (e.g., charging current reduction control or charging current stop control).

The storage module 140 may store an algorithm for performing the current control and temperature control and data required for the current control and temperature control.

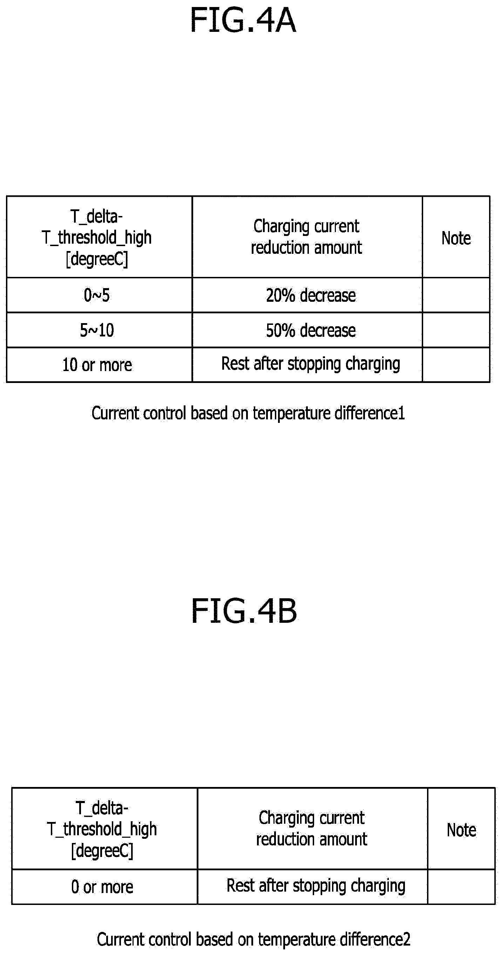

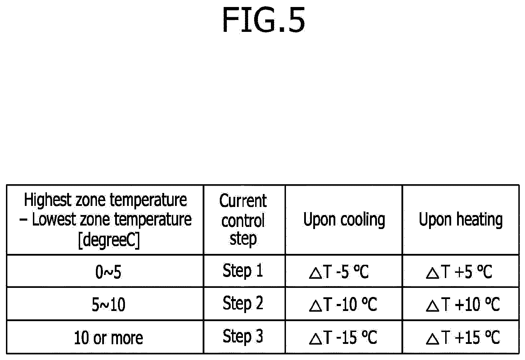

In this case, a method of performing the current control and a method of performing the temperature control will be described with reference to FIGS. 4 and 5, respectively.

In addition, in order to perform the current control and temperature control, it is a goal to accurately determine (select) the weak battery cell (or the weak section).

Here, the processor 130 may be implemented as a central processing unit (CPU) or system on chip (SOC), may control a plurality of hardware or software components connected to the processor 130 by driving an operating system or application, and may perform processing and calculation on various types of data. The processor 130 may be configured to execute at least one command stored in a memory (not illustrated) and store execution result data in the memory.

Referring to FIG. 2, the processor 130 may detect (measure) the temperature for each section of the battery cell through the temperature sensor 110 (S101).

The processor 130 may determine (select) the weak battery cell based on the temperature for each section of the battery cell detected through the temperature sensor 110 (S102).

Once a weak battery cell is determined (selected), the processor 130 may perform at least one of the temperature control (e.g., cooling control or heating control) (see FIG. 5) and current control (e.g., charging current reduction control or charging current stop control) (see FIGS. 4A and 4B) on the weak battery cell (S103 and S104).

FIGS. 4A and 4B are exemplary views for describing a method of determining a weak battery cell and performing current control in FIG. 2.

Referring to FIGS. 4A and 4B, the processor 130 may detect the temperature for each section of each battery cell, calculate a section temperature difference T_delta by comparing a temperature T_max of the highest temperature section with a temperature T_min of the lowest temperature section, temperature difference, and may determine (select) that a battery cell with the greatest section temperature difference T_delta among the battery cells is a weak battery cell.

For example, assuming that three battery cells each divided into nine sections are present and among the battery cells, a section temperature difference T_delta calculated by comparing temperatures for the sections of a first battery cell is 10 °C, a section temperature difference T_delta calculated by comparing temperatures for the sections of a second battery cell is 8 °C, and a section temperature difference T_delta calculated by comparing temperatures for the sections of a third battery cell is 5 °C, the processor 130 determines (selects) that a battery cell (e.g., the first battery cell) with the greatest section temperature difference T_delta is a weak battery cell relative to the other two battery cells.

Therefore, if the section temperature difference value T_delta of the weak battery cell is smaller than a specified upper limit threshold temperature value T_threshold_high during battery charging, the processor 130 may continuously perform the battery charging, and if the section temperature difference value T_delta of the weak battery cell is greater than or equal to the specified upper limit threshold temperature value T_threshold_high, charging current reduction (or stop) control may be performed in the method illustrated in FIG. 4A or 4B.

However, the charging current reduction (or stop) control method illustrated in FIGS. 4A and 4B is illustrative, but the present disclosure is not limited thereto.

In addition, if the section temperature difference value T_delta of the weak battery cell is smaller than a lower limit threshold temperature value T_threshold_low after the charging current reduction (or stop), the battery may be charged with an unreduced normal current.

Here, the values of the upper limit threshold temperature T_threshold_high and the lower limit threshold temperature T_threshold_low may be preset through an experiment and set differently depending on the type, capacity, and characteristics of the battery.

In addition, the values of the upper limit threshold temperature T_threshold_high and the lower limit threshold temperature T_threshold_low are values reflecting hysteresis characteristics, and the upper limit threshold temperature value T_threshold_high is set to be greater than the lower limit threshold temperature value T_threshold_low.

FIG. 5 is an exemplary view for describing a method of determining a weak battery cell and performing temperature control in FIG. 2.

Referring to FIG. 5, the processor 130 may detect the temperature for each section of each battery cell, may calculate a section temperature difference T_delta by comparing a temperature T_max of the highest temperature section with a temperature T_min of the lowest temperature section, and may determine (select) that a battery cell with the greatest section temperature difference T_delta among the battery cells is a weak battery cell.

In addition, the processor 130 may calculate an average section temperature value of each battery cell.

The processor 130 may continuously perform charging if the section temperature difference value T_delta of the weak battery cell is smaller than a specified upper limit control temperature value T_control_high.

However, if the section temperature difference value T_delta of the weak battery cell is greater than or equal to the specified upper limit control temperature value T_control_high, the processor 130 may perform temperature control. In this case, the temperature control may be performed on only the weak battery cell, performed on all battery cells, or performed on each section of a specific battery cell. Meanwhile, if the section temperature difference value T_delta of the weak battery cell is smaller than a specified lower limit control temperature value T_control_low, the processor 130 does not perform the temperature control.

For example, the processor 130 may perform cooling control in the method illustrated in FIG. 5 if the average section temperature value of each battery cell (or the weak battery cell) is greater than a specified heater-on threshold temperature value T_threshold_heater_on and may perform heating control in the method illustrated in FIG. 5 if the average section temperature value of each battery cell (or the weak battery cell) is smaller than or equal to the specified heater-on threshold temperature value T_threshold_heater_on. However, the temperature control method illustrated in FIG. 5 is illustrative, but the present invention is not limited thereto.

In this case, the values of the upper limit control temperature T_control_high and the lower limit control temperature T_control_low may be preset through an experiment and may be changed depending on the type, capacity, and characteristics of the battery. In addition, the values of the upper limit control temperature T_control_high and the lower limit control temperature T_control_low are values reflecting hysteresis characteristics, and the upper limit control temperature value T_control_high may preferably be greater than the lower limit control temperature value T_control_low. In addition, the above-described values may be set in the order of the upper limit threshold temperature T_threshold_high > the upper limit control temperature T_control_high > the lower limit threshold temperature T_threshold_low > the lower limit control temperature T_control_low.

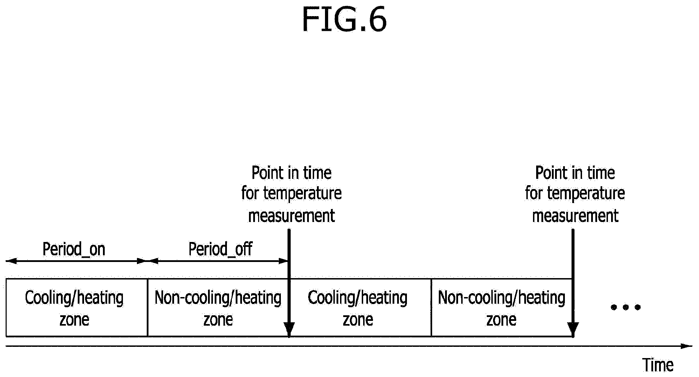

FIG. 6 is an exemplary view for describing start points of a temperature detecting operation and a temperature control operation to be performed on a battery cell in FIG. 1 according to one or more embodiments.

If the processor 130 performs a temperature detecting (sensing) operation using the temperature sensor 110 during the temperature control of each battery cell (or the weak battery cell), temperature sensing errors may increase, and thus the temperature control operation and the temperature detecting operation may not be simultaneously performed, and as illustrated in FIG. 6, the temperature detecting operation may be performed after a specified time Period_off has elapsed after the temperature control operation (i.e., a cooling or heating operation).

In addition, if not performing the temperature control operation, the processor 130 may perform the temperature detecting operation according to a specified cycle (e.g., 1 second).

Meanwhile, depending on the settings, the processor 130 may only perform the temperature control (e.g., the cooling control or heating control) (see FIG. 5) on each battery cell (or the weak battery cell), only perform the current control (e.g., the charging current reduction control or charging current stop control) (see FIGS. 4A and 4B), or perform both the temperature control and the current control.

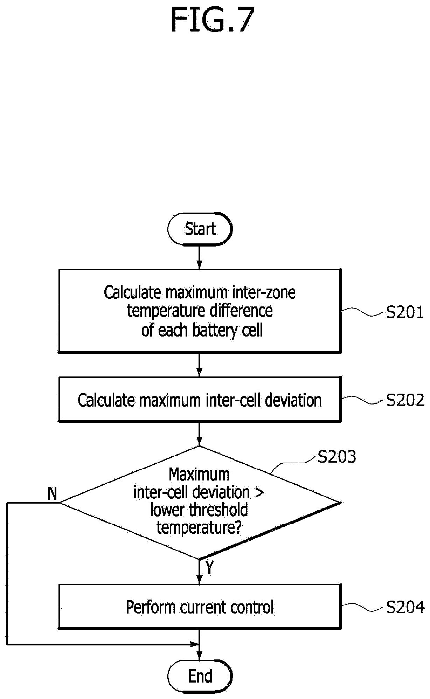

Hereinafter, a method of more accurately determining (selecting) a weak battery cell (i.e., a weak battery cell) in a battery module composed of a plurality of battery cells will be described with reference to FIGS. 7 to 11 according to one or more embodiments.

For reference, when a temperature difference between a cooling unit of the battery and the outside of the cooling unit is large (e.g., in the case of a bottom cooling system), a temperature difference between sections may frequently occur even in a single battery cell.

Therefore, since a temperature value measured from the battery cell sensitively reacts to a surrounding environment, a temperature value with much noise (i.e., inaccuracy) may be measured. Therefore, since the accuracy for the performance of the current control only with the simply measured temperature value is reduced (i.e., since a charging time increases or the effect of extending the battery lifetime is reduced if the accuracy of the determination of the current control time point is reduced), there is a need for a method of more accurately performing the current by maximally reducing the noise.

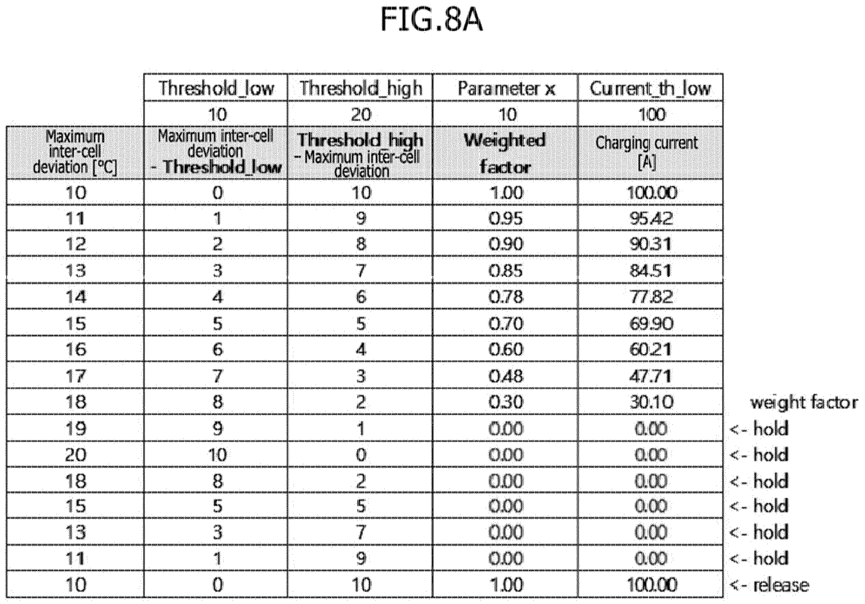

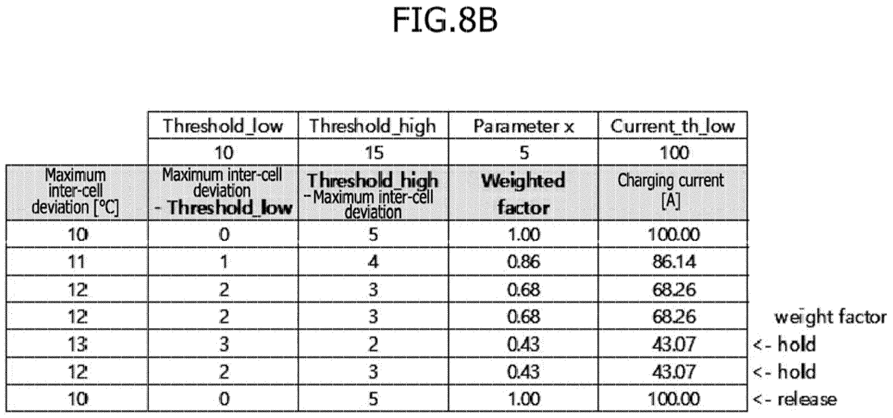

FIG. 7 is a flowchart for describing a method of performing charging current control according to a one or more embodiments of the present invention, and FIGS. 8A and 8B are tables for exemplarily describing the method of performing charging current control according to a maximum inter-cell deviation in FIG. 7.

In the present embodiment, as illustrated in FIG. 7, for the plurality of battery cells constituting the battery module (or the battery pack), the processor 130 may calculate maximum temperature deviations dCell1 to dCellN for the sections of each battery cell (S201). In addition, among the maximum temperature deviations dCell1 to dCellN for the sections of each battery cell, a maximum temperature deviation between the battery cell (i.e., a maximum inter-cell deviation) is calculated by subtracting the smallest temperature deviation from the greatest temperature deviation (max(dCell1 to dCellN)-min(dCell1 to dCellN)) (S202). In addition, when the maximum temperature deviation value between the battery cells (i.e., the maximum inter-cell deviation) is greater than a specified threshold lower limit temperature value Threshold_low (Y in operation S203), the charging current control illustrated in FIGS. 8A and 8B may be performed on the weak battery cell (i.e., a cell with the maximum temperature deviation) (S204).

For reference, the threshold lower limit temperature value Threshold_low may be a temperature at which the occurrence of a significant current concentration phenomenon is predicted, and a threshold upper limit temperature value Threshold_high is a temperature at which a degree of internal degradation worsens due to the current concentration phenomenon, and the values of the threshold lower limit temperature Threshold_low and the threshold upper limit temperature Threshold _high may be set through an experiment.

In addition, at the time that the maximum temperature deviation value between the battery cells (i.e., the maximum inter-cell deviation) becomes greater than the threshold lower limit temperature value Threshold_low, a current charging current is stored as a lower limit threshold current value Current_th_low.

As illustrated in FIGS. 8A and 8B, the processor 130 may perform the current reduction control using a difference value between the maximum temperature deviation value between the battery cells (i.e., the maximum inter-cell deviation) and the specified threshold upper limit temperature value Threshold_high.

Here, a parameter value Parameter_x is a value obtained by subtracting the threshold lower limit temperature value Threshold_low from the threshold upper limit temperature value Threshold_high, a weight value Weighted_factor is a value (i.e., Logₓ(Threshold_high minus the maximum inter-cell deviation value) obtained by subtracting the maximum temperature deviation value between the battery cells (i.e., the maximum inter-cell deviation) from the threshold upper limit temperature value Threshold _high and taking a log of the resultant value, and the charging current is a value obtained by subtracting the weight value Weighted_factor from the lower limit threshold current value Current_th_low.

Referring to FIG. 8A, when performing the current reduction control, the processor 130 may stop (hold) the charging without performing the current reduction control if the value obtained by subtracting the maximum temperature deviation between the battery cells (i.e., the maximum inter-cell deviation) from the threshold upper limit temperature value Threshold_high is 1 (i.e., when the weight value is 0).

In this case, the weight value Weighted_factor may only be changed to decrease in the range of the threshold upper limit temperature Threshold_high and the threshold lower limit temperature Threshold_low. In other words, even if the battery temperature is reduced due to a reduction in the charging current, the processor 130 may not immediately control the charging current in an increasing direction in order to sufficiently reduce a difference in temperatures for the sections of a defective cell (i.e., a weak battery cell).

However, if the maximum temperature deviation value between the battery cells (i.e., the maximum inter-cell deviation) is smaller than the threshold lower limit temperature Threshold_low, the weight value Weighted_factor may be reset to 1, and thus the processor 130 may finish the stop of the charging and re-performs charging.

Comparing FIGS. 8A to 8B, in FIG. 8B, if the already reduced current (e.g., 43.07 A) is continuously maintained (hold) rather than stopping the charging if the value obtained by subtracting the maximum temperature deviation value between the battery cells (i.e., the maximum inter-cell deviation) from the threshold upper limit temperature value Threshold_high is not 1 (i.e., the weight value is not 0) and then the maximum temperature deviation value between the battery cells (i.e., the maximum inter-cell deviation) is smaller than the threshold lower limit temperature Threshold_low, the weight value Weighted_factor may be reset to 1, and the processor 130 re-performs charging with an original maximum current (e.g., 100.00 A) by increasing the charging current.

The current control method illustrated in FIGS. 8A and 8B is illustrative, but the present invention is not limited thereto.

Some embodiments may involve a case in which it is difficult to determine the occurrence of the temperature deviation due to the current concentration phenomenon only with the above-described maximum temperature deviation between the battery cells (i.e., the maximum inter-cell deviation).

For example, in the case of a battery module to which the bottom cooling system is applied, rather than causing the temperature deviation due to the influence of the current concentration phenomenon, a temperature difference between lower and upper portions of the battery cell may occur due to the influence of a cooling operation of the bottom cooling system. In order to check a temperature increase (i.e., heat) which occurs as the current is concentrated in a specific section of the battery cell, in the present example embodiment, average values of temperature slopes (e.g. temperature differences) with respect to surrounding temperatures for each section of the battery cell (i.e., average values of the temperature deviations with nearby sections (e.g., adjacent or part of the same battery cell) for each section of the battery cell) may be used.

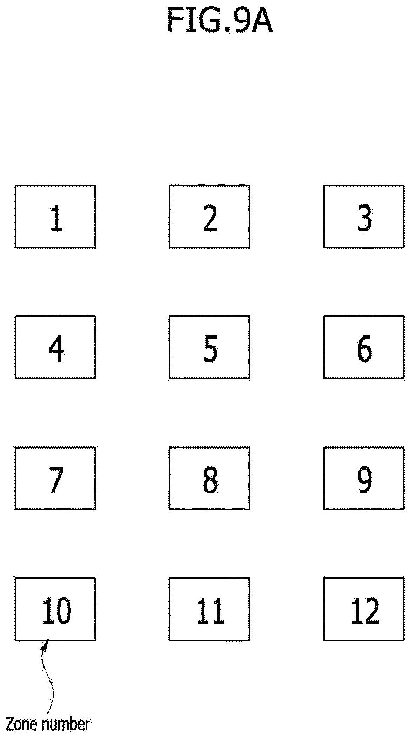

FIGS. 9A to 9E are exemplary views for describing a method of calculating values of the temperature slopes with respect to the surrounding temperatures for each section of the battery cell (i.e., the temperature deviations with nearby sections (e.g., adjacent or within one battery cell) for each section of the battery cell) in order to perform charging current control in a method according to one or more embodiments of the present disclosure.

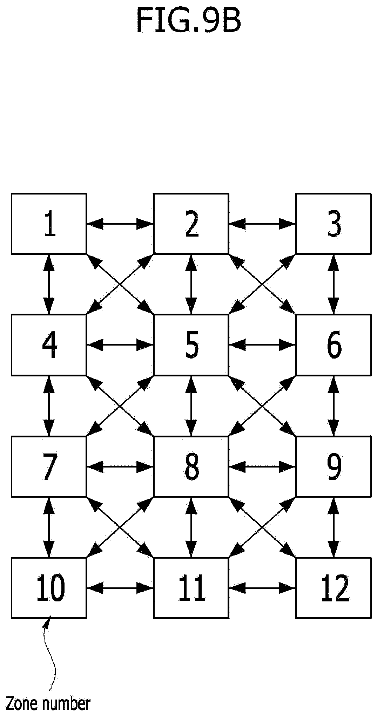

In one or more embodiments, assuming that one battery cell is divided into 12 sections as illustrated in FIG. 9A, as illustrated in FIG. 9B, temperature slopes with respect to surrounding temperatures for each section of the battery cell (i.e., the slope is an absolute value without direction, and slope values of 29 are generated in the case of 12 sections) may be calculated (e.g., three values for section 1, five values for section 2, eight values for section 5, etc.).

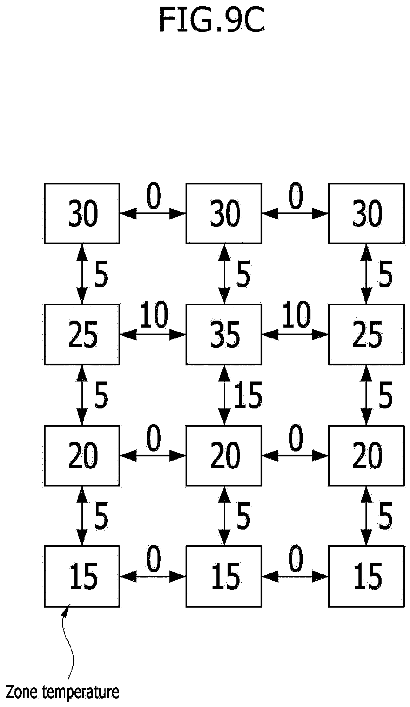

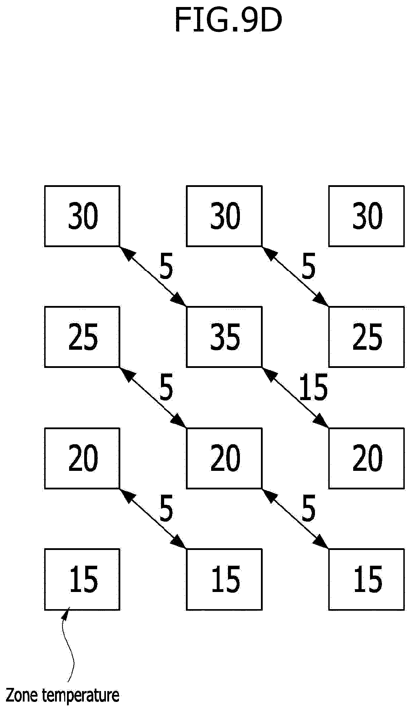

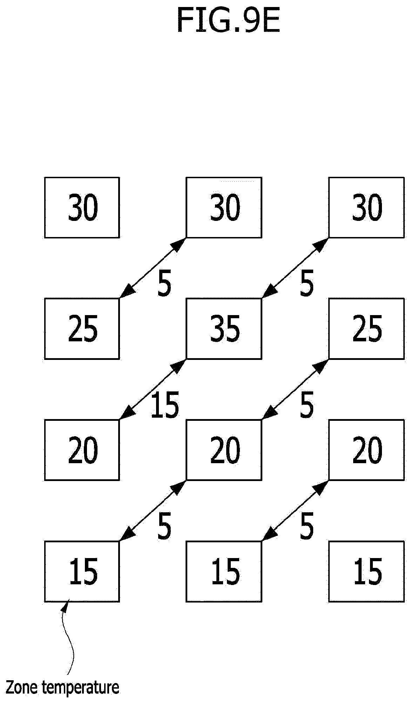

In addition, assuming that the temperature for each section has been measured as illustrated in FIGS. 9C to 9E, as illustrated in FIG. 9C, temperature slopes (i.e., temperature deviations with the nearby (e.g., adjacent) sections for each section of the battery cell) occur between vertical and horizontal sections, and as illustrated in FIGS. 9D and 9E, slopes (i.e., temperature deviations with the nearby sections for each section of the battery cell) also occur in sections in a first diagonal direction and second diagonal direction. The unit for the temperature slope may be for example °C.

Therefore, there is also a difference in the number of nearby sections to be reflected to calculate average values of the temperature slopes (hereafter, 'average temperature slopes') with respect to the surrounding temperatures for each section of the battery cell (i.e., average values of the temperature deviations (hereafter, 'average temperature deviations') with the nearby (e.g., adjacent) sections for each section of the battery cell) according to positions to positions t within he battery cell of each section.

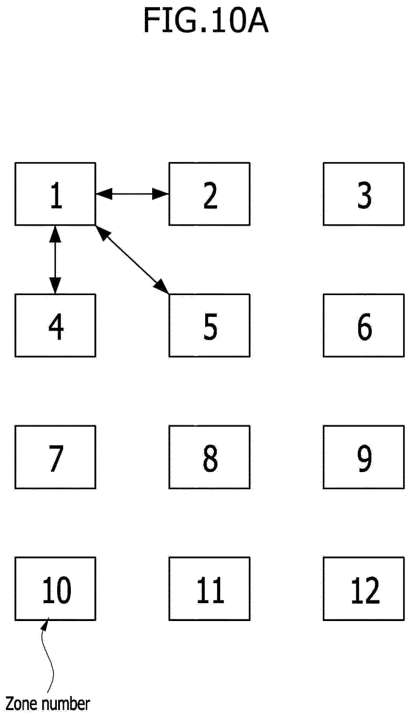

FIGS. 10A to 10C are exemplary views for describing a method of calculating average temperature slopes with respect to surrounding temperatures for each section of the battery cell (average temperature deviations with the nearby (e.g., adjacent) sections for each section of the battery cell) in FIGS. 9A to 9E.

As illustrated in FIG. 10A, in the case of sections (e.g., first, third, tenth, and twelfth sections) located at corners of the battery cell, the processor 130 reflects temperatures of three nearby (e.g., adjacent) sections and calculates three average temperature slopes for each section of the battery cell (average temperature deviations with the nearby (e.g., adjacent) sections for each section of the battery cell).

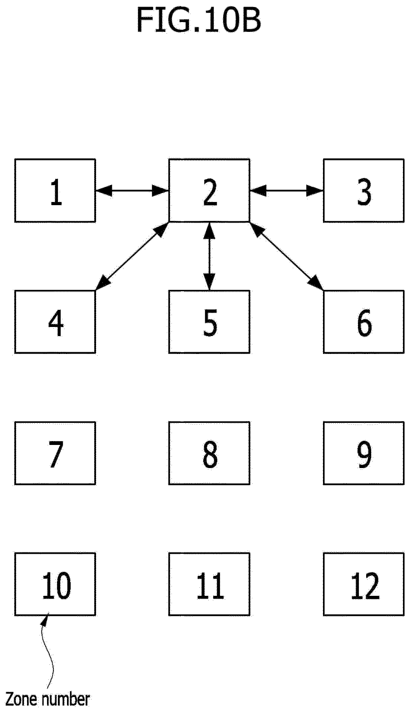

As illustrated in FIG. 10B, in the case of sections (e.g., second, fourth, sixth, seventh, ninth, and eleventh sections) located at sides of the battery cell, the processor 130 may reflect temperatures of five nearby (e.g., adjacent) sections and may calculate five average temperature slopes for each section of the battery cell (average temperature deviations with the nearby sections for each section of the battery cell).

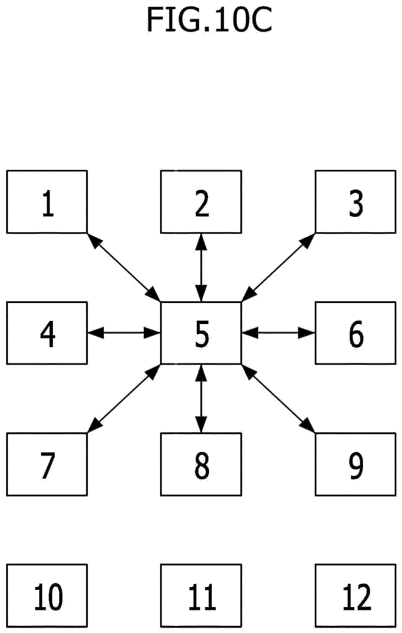

As illustrated in FIG. 10C, in the case of the remaining sections (e.g., fifth and eighth sections) except for the sections located at the corners and sides of the battery cell, the processor 130 may reflect temperatures of eight nearby sections and may calculate eight average temperature slopes for each section of the battery cell (average temperature deviations with the nearby (e.g., adjacent) sections for each section of the battery cell).

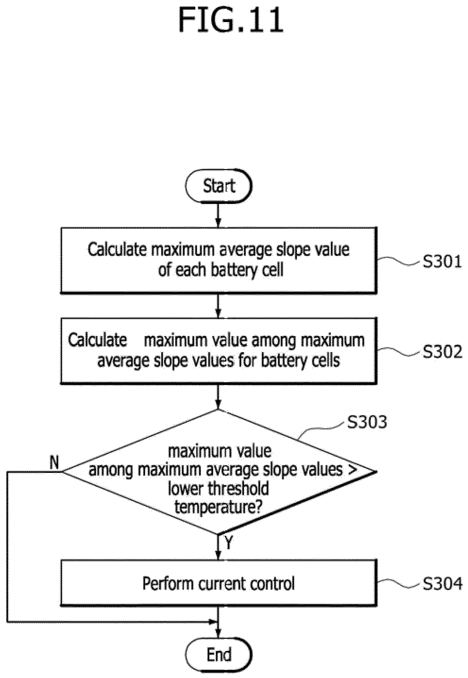

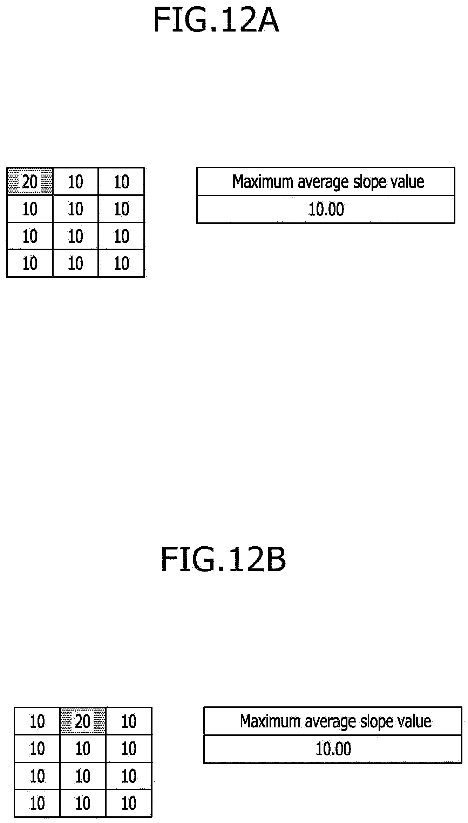

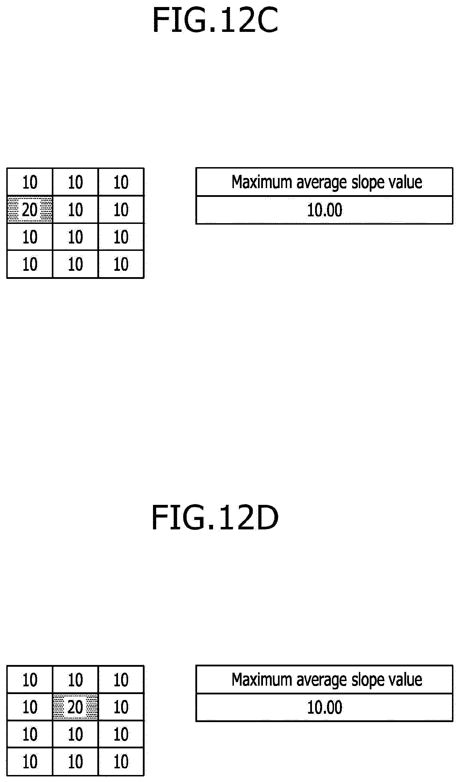

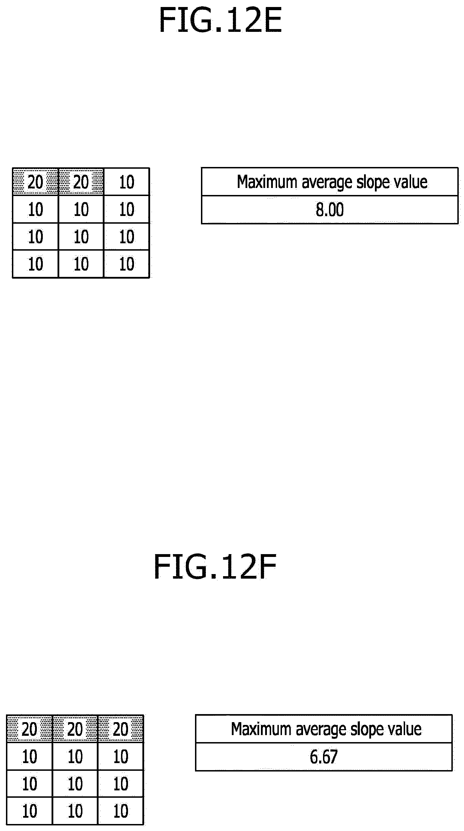

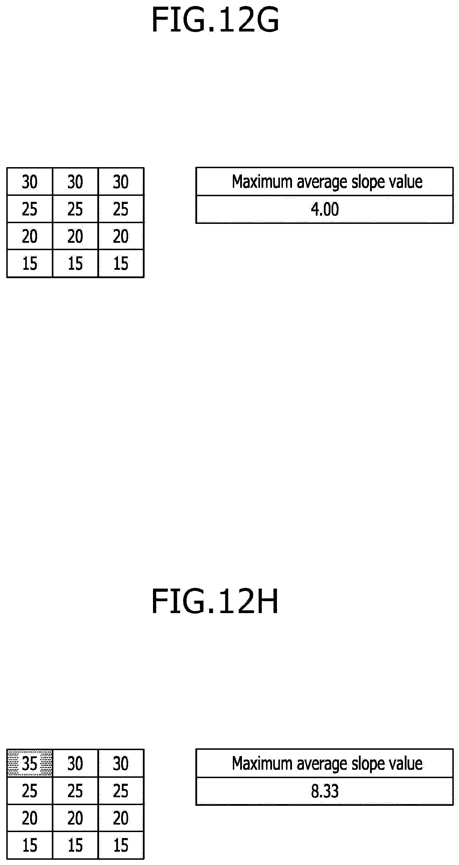

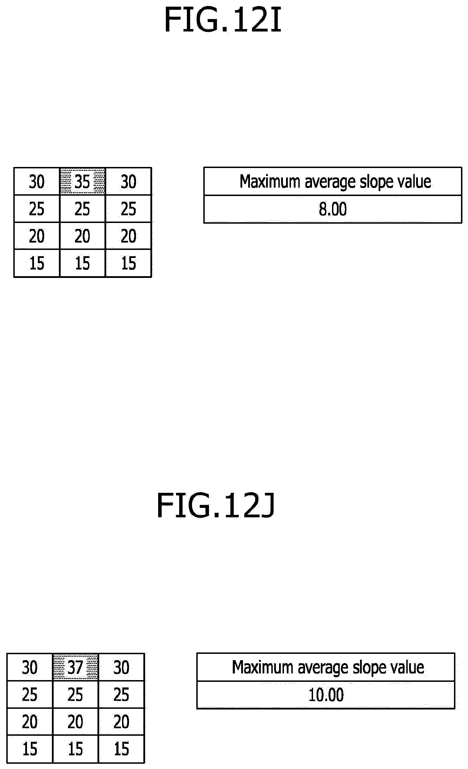

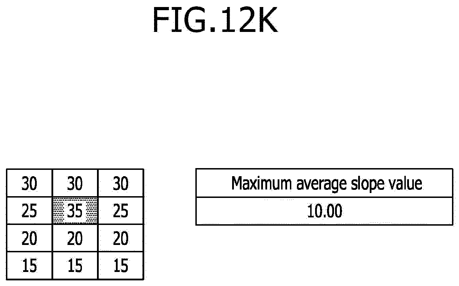

FIG. 11 is a flowchart for describing a method of performing the charging current control according to one or more embodiments of the present disclosure, and FIGS. 12A to 12K are exemplary views for describing a method of calculating each maximum value among a plurality of average temperature slopes for each battery cell ('N' maximum values for 'N' battery cells) using the average temperature slopes for respective sections of each battery cell (average temperature deviations with the nearby sections for respective sections of the battery cell) configured in a battery module in FIGS. 10A to 10C according to one or more embodiments.

As illustrated in FIGS. 12A to 12K, the processor 130 may calculate a maximum value (gCell1 to gCellN) among a plurality of average temperature slopes (hereafter, 'maximum average slope value' for each better cell) (a maximum value among average temperature deviations with the nearby (e.g., adjacent) sections for each section of the battery cell) with respect to each of the plurality of battery cells (e.g., 10 battery cells) configured in the battery module (S301).

For example, referring to FIGS. 12A to 12K, maximum values gCell1 to gCellN among a plurality of average temperature slopes for respective sections of first to eleventh battery cells, i.e. maximum average slope values for the better cells (maximum values among a plurality of average temperature deviations with nearby sections for respective sections of each battery cell) are 10.00, 10.00, 10.00, 10.00, 8.00, 6.67, 4.00, 8.33, 8.00, 10.00, and 10.00, respectively.

In addition, the processor 130 may calculate a maximum value among the maximum average slope values for the battery cells max(gCell1 to gCellN) (S302).

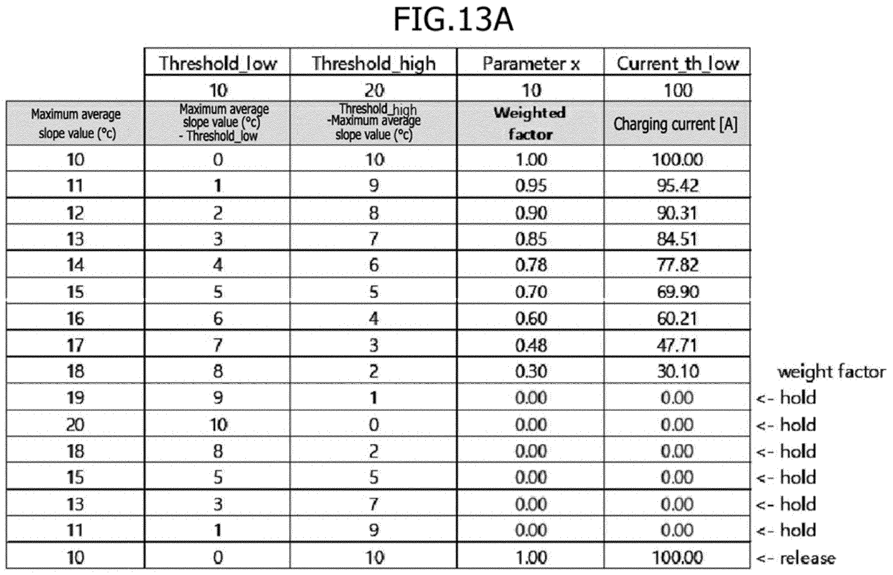

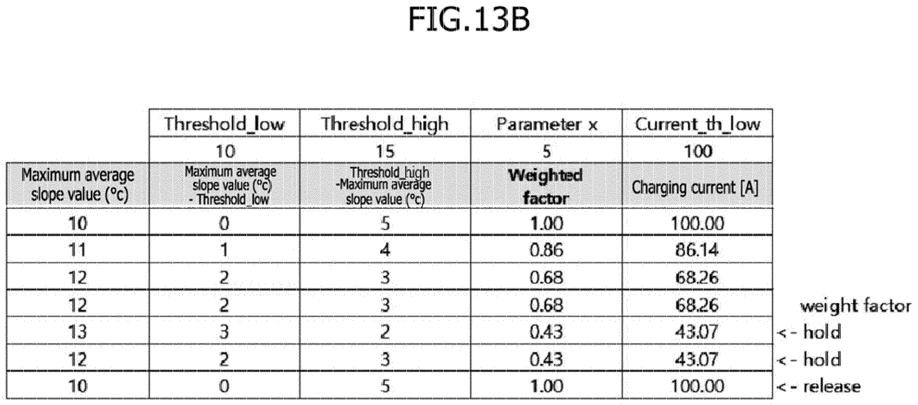

In addition, when the maximum value among the maximum average slope values for the battery cells max(gCell1 to gCellN) is greater than the specified threshold lower limit temperature value Threshold_low (Y in operation S303), the charging current control illustrated in FIGS. 13A and 13B may be performed on the weak battery cell (i.e., the cell with the maximum value among the maximum average slope values of the battery cells) (S304).

FIGS. 13A and 13B are tables for exemplarily describing the method of performing charging current control according to a maximum value among the maximum average slope values of the battery cells in FIG. 11 according to one or more embodiments.

For reference, the threshold lower limit temperature value Threshold_low may be a temperature at which the occurrence of a significant current concentration phenomenon is predicted, and a threshold upper limit temperature value Threshold _high may be temperature at which a degree of internal degradation worsens due to the current concentration phenomenon, and the values of the threshold lower limit temperature Threshold_low and the threshold upper limit temperature Threshold _high may be set through an experiment.

In addition, the processor 130 stores the current charging current as the lower limit threshold current value Current_th_low at the time that the maximum value among the maximum average slope values of the battery cells max(gCell1 to gCellN) is greater than the threshold lower limit temperature value Threshold_low.

As illustrated in FIGS. 13A and 13B, the processor 130 may perform the current reduction control using a difference value between the maximum value among the maximum average slope values of the battery cells max(gCell1 to gCellN) and the specified threshold upper limit temperature value Threshold _high.

Here, a parameter value Parameter_x is a value obtained by subtracting the threshold lower limit temperature value Threshold_low from the threshold upper limit temperature value Threshold_high, a weight value Weighted_factor is a value (i.e., Logₓ(Threshold_high minus the maximum value among the maximum average slope values of the battery cells) obtained by subtracting the maximum value among the maximum average slope values of the battery cells max(gCell1 to gCellN) from the threshold upper limit temperature value Threshold _high and then taking a log of the resultant value, and the charging current is a value obtained by subtracting the weight value Weighted_factor from the lower limit threshold current value Current_th_low.

Referring to FIG. 13A, when performing the current reduction control, the processor 130 may stop charging (hold) without performing the current reduction control if the value obtained by subtracting the maximum value among the maximum average slope values of the battery cells max(gCell1 to gCellN) from the threshold upper limit temperature value Threshold_high is 1 (i.e., when the weight value is 0).

In this case, the weight value Weighted_factor is only changed to decrease in the range of the threshold upper limit temperature Threshold_high and the threshold lower limit temperature Threshold_low. In other words, even when the battery temperature is reduced due to a reduction in the charging current, the processor 130 may not immediately control the charging current in an increasing direction in order to sufficiently reduce a difference in temperatures for the sections of a defective cell (i.e., a weak battery cell).

However, if the maximum value among the maximum average slope values of the battery cells max(gCell1 to gCellN) is smaller than the threshold lower limit temperature Threshold_low, the weight value Weighted_factor may be reset to 1, and thus the processor 130 may finish the stopping of the charging and re-performs charging.

Comparing FIGS. 13A to 13B, in FIG. 13B, if the already reduced current (e.g., 43.07 A) is continuously maintained (hold) rather than stopping the charging if the value obtained by subtracting the maximum value among the maximum average slope values of the battery cells max(gCell1 to gCellN) from the threshold upper limit temperature value Threshold_high is not 1 (i.e., the weight value is not 0) and the maximum value among the maximum average slope values of the battery cells max(gCell1 to gCellN) is smaller than the threshold lower limit temperature Threshold_low, the weight value Weighted_factor is reset to 1, and thus the processor 130 re-performs charging with an original maximum current (e.g., 100.00 A) by increasing the charging current.

However, the current control method illustrated in FIGS. 13A and 13B is illustrative, but the present invention is not limited thereto.

Typically, although the occurrence of temperature unbalance between battery cells may be less when a battery module is charged at the lowest possible rate, there may be a problem in that a charging time takes too long, and thus in the various embodiments, by determining a current control time point more accurately than before, that is, charging the battery module with a normal current just before the temperature imbalance increase and controlling a charging current if the imbalance increases to a reference or more to reduce a partial degradation phenomenon of the battery cell, it is possible to not only secure the lifetime of a battery but also secure an efficient charging time.

In the present disclosure, by resolving the temperature imbalance more actively rather than restricting the charging current if the temperature imbalance between the battery cells during charging occurs to reduce the temperature unbalance, it is possible to not only reduce the degradation phenomenon but also shorten the charging time.

A battery management apparatus and method according to the present disclosure can prevent unbalanced charging between battery cells in a battery module (or a battery pack) including a plurality of battery cells.

In addition, the battery management apparatus and method according to the present invention can prevent unbalanced charging between sections in a single battery cell.

## Claims

1. A battery management apparatus comprising:
a temperature sensor (110), and
a processor (130),
a heat management module (120),
**characterised in that**
the temperature sensor (110) is configured to measure a temperature for each section of each battery cell (BAT) included in a battery module;
the heat management module (120) is configured to control a temperature of a battery cell (BAT) or the temperature for each section of each battery cell (BAT);
the processor (130) is configured to:
calculate a maximum average slope value (gCell1~gCellN) for each battery cell (BAT) which is a maximum value among a plurality of average temperature slopes for each section of each battery cell (BAT), wherein the maximum average slope value corresponds to a maximum value among a plurality of average temperature deviations with nearby sections for respective sections of each battery cell (BAT), and
perform temperature control via the heat management module (120) or charging current control on a weak battery cell (BAT) based on the maximum average slope values (gCell1~gCellN) of a plurality of battery cells (BAT).

2. The battery management apparatus of claim 1, wherein, if a maximum average slope value (max(gCell1~gCellN)) among the maximum average slope values (gCell1~gCellN) of the plurality of battery cells (BAT) is greater than a specified threshold lower limit temperature value (Threshold_low), the processor (130) is configured to perform the temperature control or the charging current control on the weak battery cell (BAT) corresponding to a battery cell (BAT) of which the maximum value among the plurality of average temperature deviations with nearby sections for respective sections is greatest.

3. The battery management apparatus of claim 2, wherein, when performing the charging current control,
the processor (130) is configured to perform current reduction control using a difference value between the maximum average slope value (max(gCell1~gCellN)) and a specified threshold upper limit temperature value (Threshold_high).

4. The battery management apparatus of claim 3, wherein, when performing the current reduction control,
the processor (130) is configured to stop charging without performing current reduction control if a value obtained by subtracting the maximum average slope value (max(gCell1~gCellN)) from the specified threshold upper limit temperature value (Threshold_high) is 1 and a weight value (Weighted_factor) is 0.

5. The battery management apparatus of claim 4, wherein the weight value (Weighted_factor) corresponds to a value obtained by subtracting the maximum average slope value (max(gCell1~gCellN)) from the specified threshold upper limit temperature value (Threshold_high) and taking a log of a resultant value.

6. The battery management apparatus of claim 4 or 5, wherein, when performing the current reduction control,
the processor (130) is configured to not immediately control a charging current to increase by only changing the weight value to decrease in a range of the specified threshold upper limit temperature value (Threshold_high) and the specified threshold lower limit temperature (Threshold_low) even if the temperature of the battery cell (BAT) is reduced by a reduction of the charging current.

7. The battery management apparatus of claim 6, wherein, when performing the current reduction control,
the processor (130) is configured to finishe the stopping of the charging and re-performs charging with an original maximum current by increasing the charging current if the weight value (Weighted_factor) is reset to 1 as the maximum average slope value (max(gCell1~gCellN)) is smaller than the specified threshold lower limit temperature (Threshold_low).

8. The battery management apparatus of claim 4, wherein, when performing the current reduction control,
the processor (130) is configured to perform charging while continuously maintaining an already reduced current rather than stopping the charging when a value obtained by subtracting the maximum average slope value (max(gCell1~gCellN)) from the specified threshold upper limit temperature value (Threshold_high) is not 1 and the weight value is not 0.

9. A battery management method **characterised in that**:
calculating, by a processor (130), with respect to a plurality of battery cells (BAT) included in a battery module, each of the plurality of battery cells (BAT) including a plurality of sections, a maximum average slope value (gCell1 to gCellN) for each of the plurality of battery cells (BAT) which is a maximum average slope value among a plurality of average temperature slopes for respective sections of each of the plurality of battery cell (BAT), wherein the maximum average slope value corresponds to a maximum average temperature deviation value among a plurality of average temperature deviation values with nearby sections for respective sections of each of the plurality of battery cell (BAT); and
performing, by the processor (130), temperature control or charging current control on a weak battery cell (BAT) based on the maximum average slope values (gCell1 to gCellN) of the plurality of battery cells (BAT).

10. The battery management method of claim 9, further comprising:
calculating, by the processor (130), a maximum average slope value (max(gCell1~gCellN)) among the maximum average slope values (gCell1 to gCellN) of the plurality of battery cells (BAT),
wherein, if the maximum average slope value (max(gCell1~gCellN)) of the plurality of battery cells (BAT) is greater than a specified threshold lower limit temperature value (Threshold_low), the processor (130) performs the temperature control or the charging current control on the weak battery cell (BAT) corresponding to a battery cell (BAT) of which the maximum temperature deviation value among the plurality of average temperature deviation values with nearby sections for respective sections is greatest.

11. The battery management method of claim 10, wherein, in performing the charging current control,
the processor (130) performs current reduction control using a difference value between the maximum average slope value (max(gCell1~gCellN)) and a specified threshold upper limit temperature value (Threshold_high).

12. The battery management method of claim 11, wherein, when performing the current reduction control,
the processor (130) stops charging without performing the current reduction control any more when a value obtained by subtracting the maximum average slope value (max(gCell1~gCellN)) from the specified threshold upper limit temperature value (Threshold_high) is 1 and a weight value (Weighted_factor) is 0.

13. The battery management method of claim 12, wherein the weight value (Weighted_factor) corresponds to a value obtained by subtracting the maximum average slope value (max(gCell1~gCellN)) from the specified threshold upper limit temperature value (Threshold_high) and taking a log of a resultant value.

14. The battery management method of claim 12 or 13, wherein, when performing the current reduction control,
the processor (130) does not immediately control a charging current to increase by only changing the weight value to decrease in a range of the specified threshold upper limit temperature value (Threshold_high) and the specified threshold lower limit temperature value (Threshold_low) even if the temperature of the battery cell (BAT) is reduced by reduction of the charging current.

15. The battery management method of claim 12, wherein, when performing the current reduction control,
the processor (130) (130) is configured to perform charging while continuously maintaining an already reduced current if a value obtained by subtracting the maximum value (max(gCell1~gCellN)) from the specified threshold upper limit temperature value (Threshold_high) is not 1 and the weight value is not 0.

## Patentansprüche

1. Batterieverwaltungsvorrichtung, umfassend:
einen Temperatursensor (110) und
einen Prozessor (130),
ein Wärmeverwaltungsmodul (120),
**dadurch gekennzeichnet, dass**
der Temperatursensor (110) dazu konfiguriert ist, eine Temperatur für jeden Abschnitt jeder in einem Batteriemodul enthaltenen Batteriezelle (BAT) zu messen;
das Wärmeverwaltungsmodul (120) dazu konfiguriert ist, eine Temperatur einer Batteriezelle (BAT) oder die Temperatur für jeden Abschnitt jeder Batteriezelle (BAT) zu steuern;
der Prozessor (130) dazu konfiguriert ist,
einen maximalen durchschnittlichen Steigungswert (gCell1~gCellN) für jede Batteriezelle (BAT) zu berechnen, der ein Maximalwert unter einer Vielzahl von durchschnittlichen Temperatursteigungen für jeden Abschnitt jeder Batteriezelle (BAT) ist, wobei der maximale durchschnittliche Steigungswert einem Maximalwert unter einer Vielzahl von durchschnittlichen Temperaturabweichungen mit benachbarten Abschnitten für jeweilige Abschnitte jeder Batteriezelle (BAT) entspricht, und
eine Temperatursteuerung über das Wärmeverwaltungsmodul (120) oder eine Ladestromsteuerung an einer schwachen Batteriezelle (BAT) auf der Grundlage der maximalen durchschnittlichen Steigungswerte (gCell1~gCellN) einer Vielzahl von Batteriezellen (BAT) durchzuführen.

2. Batterieverwaltungsvorrichtung nach Anspruch 1, wobei, wenn ein maximaler durchschnittlicher Steigungswert (max(gCell1~gCellN)) unter den maximalen durchschnittlichen Steigungswerten (gCell1~gCellN) der mehreren Batteriezellen (BAT) größer ist als ein festgelegter Schwellenwert für den unteren Grenztemperaturwert (Threshold_low), der Prozessor (130) dazu konfiguriert ist, die Temperatursteuerung oder die Ladestromsteuerung an der schwachen Batteriezelle (BAT) durchzuführen, die einer Batteriezelle (BAT) entspricht, deren Maximalwert unter den mehreren durchschnittlichen Temperaturabweichungen mit benachbarten Abschnitten für jeweilige Abschnitte am größten ist.

3. Batterieverwaltungsvorrichtung nach Anspruch 2, wobei bei der Durchführung der Ladestromsteuerung
der Prozessor (130) dazu konfiguriert ist, eine Stromreduzierungssteuerung unter Verwendung eines Differenzwerts zwischen dem maximalen durchschnittlichen Steigungswert (max(gCell1~gCellN)) und einem festgelegten Schwellenwert für den oberen Grenztemperaturwert (Threshold_high) durchzuführen.

4. Batterieverwaltungsvorrichtung nach Anspruch 3, wobei bei der Durchführung der Stromreduzierungssteuerung
der Prozessor (130) so konfiguriert ist, dass er den Ladevorgang stoppt, ohne eine Stromreduzierungssteuerung durchzuführen, wenn ein Wert, der durch Subtraktion des maximalen durchschnittlichen Steigungswerts (max(gCell1~gCellN)) vom festgelegten Schwellenwert für den oberen Grenztemperaturwert (Threshold_high) erhalten wird, 1 ist und ein Gewichtungswert (Weighted_factor) 0 ist.

5. Batterieverwaltungsvorrichtung nach Anspruch 4, wobei der Gewichtungswert (Weighted_factor) einem Wert entspricht, der durch Subtraktion des maximalen durchschnittlichen Steigungswerts (max(gcell1-gCellN)) vom festgelegten Schwellenwert für den oberen Grenztemperaturwert (Threshold_high) und durch Logarithmieren eines resultierenden Werts erhalten wird.

6. Batterieverwaltungsvorrichtung nach Anspruch 4 oder 5, wobei bei der Durchführung der Stromreduzierungssteuerung
der Prozessor (130) so konfiguriert ist, dass er einen Ladestrom nicht sofort so steuert, dass dieser ansteigt, indem er nur den Gewichtungswert ändert, um diesen in einem Bereich des festgelegten Schwellenwerts für den oberen Grenztemperaturwert (Threshold_high) und des festgelegten Schwellenwerts für die untere Grenztemperatur (Threshold_low) zu verringern, selbst wenn die Temperatur der Batteriezelle (BAT) durch eine Verringerung des Ladestroms gesenkt wird.

7. Batterieverwaltungsvorrichtung nach Anspruch 6, wobei bei der Durchführung der Stromreduzierungssteuerung
der Prozessor (130) so konfiguriert ist, dass er das Stoppen des Ladevorgangs beendet und den Ladevorgang erneut mit einem ursprünglichen Maximalstrom durchführt, indem er den Ladestrom erhöht, wenn der Gewichtungswert (Weighted_factor) auf 1 zurückgesetzt wird, da der maximale durchschnittliche Steigungswert (max(gCell1~gCellN)) kleiner ist als der festgelegte Schwellenwert für die untere Grenztemperatur (Threshold_low) ist.

8. Batterieverwaltungsvorrichtung nach Anspruch 4, wobei bei der Durchführung der Stromreduzierungssteuerung
der Prozessor (130) dazu konfiguriert ist, den Ladevorgang während kontinuierlicher Aufrechterhaltung eines bereits reduzierten Stroms durchzuführen, anstatt den Ladevorgang zu stoppen, wenn ein Wert, der durch Subtraktion des maximalen durchschnittlichen Steigungswerts (max(gCell1~gCellN)) vom festgelegten Schwellenwert für den oberen Grenztemperaturwert (Threshold_high) erhalten wird, nicht 1 ist und der Gewichtungswert nicht 0 ist.

9. Batterieverwaltungsverfahren, **dadurch gekennzeichnet, dass**
durch einen Prozessor (130) in Bezug auf eine Vielzahl von in einem Batteriemodul enthaltenen Batteriezellen (BAT), wobei jede der Vielzahl von Batteriezellen (BAT) eine Vielzahl von Abschnitten umfasst, ein maximaler durchschnittlicher Steigungswert (gCell1 bis gCellN) für jede der Vielzahl von Batteriezellen (BAT) berechnet wird, der ein maximaler durchschnittlicher Steigungswert unter einer Vielzahl von durchschnittlichen Temperatursteigungen für jeweilige Abschnitte jeder der Vielzahl von Batteriezellen (BAT) ist, wobei der maximale durchschnittliche Steigungswert einem maximalen durchschnittlichen Temperaturabweichungswert unter einer Vielzahl von durchschnittlichen Temperaturabweichungswerten mit benachbarten Abschnitten für jeweilige Abschnitte jeder der Vielzahl von Batteriezellen (BAT) entspricht; und
durch den Prozessor (130) eine Temperatursteuerung oder Ladestromsteuerung an einer schwachen Batteriezelle (BAT) auf der Grundlage der maximalen durchschnittlichen Steigungswerte (gCell1 bis gCellN) der mehreren Batteriezellen (BAT) durchgeführt wird.

10. Batterieverwaltungsverfahren nach Anspruch 9, umfassend ferner:
Berechnen eines maximalen durchschnittlichen Steigungswerts (max(gCell1~gCellN)) unter den maximalen durchschnittlichen Steigungswerten (gCell1 bis gCellN) der mehreren Batteriezellen (BAT) durch den Prozessor (130),
wobei, wenn der maximale durchschnittliche Steigungswert (max(gCell1~gCellN)) der mehreren Batteriezellen (BAT) größer ist als ein festgelegter Schwellenwert für den unteren Grenztemperaturwert (Threshold_low), der Prozessor (130) die Temperatursteuerung oder die Ladestromsteuerung an der schwachen Batteriezelle (BAT) durchführt, die einer Batteriezelle (BAT) entspricht, deren maximaler Temperaturabweichungswert unter den mehreren durchschnittlichen Temperaturabweichungswerten mit benachbarten Abschnitten für jeweilige Abschnitte am größten ist.

11. Batterieverwaltungsverfahren nach Anspruch 10, wobei bei der Durchführung der Ladestromsteuerung
der Prozessor (130) eine Stromreduzierungssteuerung unter Verwendung eines Differenzwerts zwischen dem maximalen durchschnittlichen Steigungswert (max(gCell1~gCellN)) und einem festgelegten Schwellenwert für den oberen Grenztemperaturwert (Threshold_high) durchführt.

12. Batterieverwaltungsverfahren nach Anspruch 11, wobei bei der Durchführung der Stromreduzierungssteuerung
der Prozessor (130) den Ladevorgang stoppt, ohne die Stromreduzierungssteuerung weiter durchzuführen, wenn ein Wert, der durch Subtraktion des maximalen durchschnittlichen Steigungswerts (max(gCell1~gCellN)) vom festgelegten Schwellenwert für den oberen Grenztemperaturwert (Threshold_high) erhalten wird, 1 ist und ein Gewichtungswert (Weighted_factor) 0 ist.

13. Batterieverwaltungsverfahren nach Anspruch 12, wobei der Gewichtungswert (Weighted_factor) einem Wert entspricht, der durch Subtraktion des maximalen durchschnittlichen Steigungswerts (max(gcell1~gCellN)) vom festgelegten Schwellenwert für den oberen Grenztemperaturwert (Threshold_high) und durch Logarithmieren eines resultierenden Werts erhalten wird.

14. Batterieverwaltungsverfahren nach Anspruch 12 oder 13, wobei bei der Durchführung der Stromreduzierungssteuerung
der Prozessor (130) einen Ladestrom nicht sofort so steuert, dass dieser ansteigt, indem er nur den Gewichtungswert ändert, um diesen in einem Bereich des festgelegten Schwellenwerts für den oberen Grenztemperaturwert (Threshold_high) und des festgelegten Schwellenwerts für den unteren Grenztemperaturwert (Threshold_low) zu verringern, selbst wenn die Temperatur der Batteriezelle (BAT) durch eine Verringerung des Ladestroms gesenkt wird.

15. Batterieverwaltungsverfahren nach Anspruch 12, wobei bei der Durchführung der Stromreduzierungssteuerung
der Prozessor (130) dazu konfiguriert ist, den Ladevorgang während kontinuierlicher Aufrechterhaltung eines bereits reduzierten Stroms durchzuführen, wenn ein Wert, der durch Subtraktion des Maximalwerts (max(gcell1~gCellN)) vom festgelegten Schwellenwert für den oberen Grenztemperaturwert (Threshold_high) erhalten wird, nicht 1 ist und der Gewichtungswert nicht 0 ist.

## Revendications

1. Appareil de gestion de batterie comportant :
un capteur de température (110), et
un processeur (130),
un module de gestion thermique (120),
**caractérisé en ce que**
le capteur de température (110) est configuré pour mesurer une température pour chaque section de chaque élément de batterie (BAT) inclus dans un module de batterie ;
le module de gestion thermique (120) est configuré pour commander une température d'un élément de batterie (BAT) ou la température pour chaque section de chaque élément de batterie (BAT) ;
le processeur (130) est configuré pour :
calculer une valeur de pente moyenne maximale (gCell1~gCellN) pour chaque élément de batterie (BAT) qui est une valeur maximale parmi une pluralité de pentes de température moyennes pour chaque section de chaque élément de batterie (BAT), dans lequel la valeur de pente moyenne maximale correspond à une valeur maximale parmi une pluralité d'écarts de température moyens avec des sections voisines pour des sections respectives de chaque élément de batterie (BAT), et
réaliser une commande de température via le module de gestion thermique (120) ou une commande de courant de charge sur un élément de batterie faible (BAT) sur la base des valeurs de pente moyennes maximales (gCell1~gCellN) d'une pluralité d'éléments de batterie (BAT).

2. Appareil de gestion de batterie selon la revendication 1, dans lequel, si une valeur de pente moyenne maximale (max(gCell1~gCellN)) parmi les valeurs de pente moyennes maximales (gCell1~gCellN) de la pluralité d'éléments de batterie (BAT) est supérieure à une valeur de température limite inférieure de seuil spécifiée (Threshold_low), le processeur (130) est configuré pour réaliser la commande de température ou la commande de courant de charge sur l'élément de batterie faible (BAT) correspondant à un élément de batterie (BAT) dont la valeur maximale parmi la pluralité d'écarts de température moyens avec des sections voisines pour des sections respectives est la plus élevée.

3. Appareil de gestion de batterie selon la revendication 2, dans lequel, lors de la réalisation de la commande de courant de charge,
le processeur (130) est configuré pour réaliser une commande de réduction de courant en utilisant une valeur de différence entre la valeur de pente moyenne maximale (max(gCell1~gCellN)) et une valeur de température limite supérieure de seuil spécifiée (Threshold_high).

4. Appareil de gestion de batterie selon la revendication 3, dans lequel, lors de la réalisation de la commande de réduction de courant,
le processeur (130) est configuré pour arrêter la charge sans réaliser de commande de réduction de courant si une valeur obtenue en soustrayant la valeur de pente moyenne maximale (max(gCell1~gCellN)) de la valeur de température limite supérieure de seuil spécifiée (Threshold_high) est égale à 1 et qu'une valeur de poids (Weighted_factor) est égale à 0.

5. Appareil de gestion de batterie selon la revendication 4, dans lequel la valeur de poids (Weighted_factor) correspond à une valeur obtenue en soustrayant la valeur de pente moyenne maximale (max(gCell1~gCellN)) de la valeur de température limite supérieure de seuil spécifiée (Threshold_high) et en prenant un logarithme d'une valeur résultante.

6. Appareil de gestion de batterie selon la revendication 4 ou 5, dans lequel, lors de la réalisation de la commande de réduction de courant,
le processeur (130) est configuré pour ne pas commander immédiatement l'augmentation d'un courant de charge en modifiant uniquement la valeur de poids pour qu'elle diminue dans une plage de la valeur de température limite supérieure de seuil spécifiée (Threshold_high) et de la température limite inférieure de seuil spécifiée (Threshold_low) même si la température de l'élément de batterie (BAT) est réduite par une réduction du courant de charge.

7. Appareil de gestion de batterie selon la revendication 6, dans lequel, lors de la réalisation de la commande de réduction de courant,
le processeur (130) est configuré pour terminer l'arrêt de la charge et réaliser à nouveau la charge avec un courant maximal d'origine en augmentant le courant de charge si la valeur de poids (Weighted_factor) est réinitialisée à 1 lorsque la valeur de pente moyenne maximale (max(gCell1~gCellN)) est inférieure à la température limite inférieure de seuil spécifiée (Threshold_low).

8. Appareil de gestion de batterie selon la revendication 4, dans lequel, lors de la réalisation de la commande de réduction de courant,
le processeur (130) est configuré pour réaliser une charge tout en maintenant continuellement un courant déjà réduit plutôt que d'arrêter la charge lorsqu'une valeur obtenue en soustrayant la valeur de pente moyenne maximale (max(gCell1~gCellN)) de la valeur de température limite supérieure de seuil spécifiée (Threshold_high) n'est pas égale à 1 et que la valeur de poids n'est pas égale à 0.

9. Procédé de gestion de batterie **caractérisé par** :
le calcul, par un processeur (130), par rapport à une pluralité d'éléments de batterie (BAT) inclus dans un module de batterie, chacun de la pluralité d'éléments de batterie (BAT) incluant une pluralité de sections, d'une valeur de pente moyenne maximale (gCell1 à gCellN) pour chacun de la pluralité d'éléments de batterie (BAT) qui est une valeur de pente moyenne maximale parmi une pluralité de pentes de température moyennes pour des sections respectives de chacun de la pluralité d'éléments de batterie (BAT), dans lequel la valeur de pente moyenne maximale correspond à une valeur d'écart de température moyenne maximale parmi une pluralité de valeurs d'écart de température moyennes avec des sections voisines pour des sections respectives de chacune de la pluralité d'éléments de batterie (BAT) ; et
la réalisation, par le processeur (130), d'une commande de température ou d'une commande de courant de charge sur un élément de batterie faible (BAT) sur la base des valeurs de pente moyennes maximales (gCell1 à gCellN) de la pluralité d'éléments de batterie (BAT).

10. Procédé de gestion de batterie selon la revendication 9, comportant en outre :
le calcul, par le processeur (130), d'une valeur de pente moyenne maximale (max(gCell1~gCellN)) parmi les valeurs de pente moyennes maximales (gCell1 à gCellN) de la pluralité d'éléments de batterie (BAT),
dans lequel, si la valeur de pente moyenne maximale (max(gCell1~gCellN)) de la pluralité d'éléments de batterie (BAT) est supérieure à une valeur de température limite inférieure de seuil spécifiée (Threshold_low), le processeur (130) réalise la commande de température ou la commande de courant de charge sur l'élément de batterie faible (BAT) correspondant à un élément de batterie (BAT) dont la valeur d'écart de température maximale parmi la pluralité de valeurs d'écart de température moyenne avec des sections voisines pour des sections respectives est la plus élevée.

11. Procédé de gestion de batterie selon la revendication 10, dans lequel, lors de la réalisation de la commande de courant de charge,
le processeur (130) réalise une commande de réduction de courant en utilisant une valeur de différence entre la valeur de pente moyenne maximale (max(gCell1~gCellN)) et une valeur de température limite supérieure de seuil spécifiée (Threshold_high).

12. Procédé de gestion de batterie selon la revendication 11, dans lequel, lors de la réalisation de la commande de réduction de courant,
le processeur (130) arrête la charge sans réaliser la commande de réduction de courant lorsqu'une valeur obtenue en soustrayant la valeur de pente moyenne maximale (max(gCell1~gCellN)) de la valeur de température limite supérieure de seuil spécifiée (Threshold_high) est égale à 1 et qu'une valeur de poids (Weighted_factor) est égale à 0.

13. Procédé de gestion de batterie selon la revendication 12, dans lequel la valeur de poids (Weighted_factor) correspond à une valeur obtenue en soustrayant la valeur de pente moyenne maximale (max(gCell1~gCellN)) de la valeur de température limite supérieure de seuil spécifiée (Threshold_high) et en prenant un logarithme d'une valeur résultante.

14. Procédé de gestion de batterie selon la revendication 12 ou 13, dans lequel, lors de la réalisation de la commande de réduction de courant,
le processeur (130) ne commande pas immédiatement l'augmentation d'un courant de charge en modifiant uniquement la valeur de poids pour qu'elle diminue dans une plage de la valeur de température limite supérieure de seuil spécifiée (Threshold_high) et de la valeur de température limite inférieure de seuil spécifiée (Threshold_low) même si la température de l'élément de batterie (BAT) est réduite par réduction du courant de charge.

15. Procédé de gestion de batterie selon la revendication 12, dans lequel, lors de la réalisation de la commande de réduction de courant,
le processeur (130) est configuré pour réaliser une charge tout en maintenant continuellement un courant déjà réduit si une valeur obtenue en soustrayant la valeur maximale (max(gCell1~gCellN)) de la valeur de température limite supérieure de seuil spécifiée (Threshold_high) n'est pas égale à 1 et que la valeur de poids n'est pas égale à 0.
